# EUROPEAN PATENT SPECIFICATION

(11) **EP 0 701 922 B1**
(45) Date of publication and mention of the grant of the patent: **01.12.1999**
(21) Application number: 95114135.7
(22) Date of filing: 08.09.1995
(51) Int. Cl.: B60Q 1/05

(54) **Bidirectional earth-mover**
Zweirichtungserdbewegungsmaschine
Engin de terrassement bidirectionnee

(30) Priority: 13.09.1994 IT PD940161
(43) Date of publication of application: 20.03.1996
(73) Proprietor: ANTONIO CARRARO S.p.A., 35011 Campodarsego (Padova) (IT)
(72) Inventor: Martignon, Girolamo, I-35010 Borgoricco, (Padova) (IT)
(74) Representative: Modiano, Guido, Dr.-Ing.

(56) References cited:
- US-A- 4 851 970
- US-A- 5 171 083
- US-A- 5 195 813

## Description

The present invention relates to a bidirectional earth-mover.

The use of earth-movers that are bidirectional in terms of travel direction in various fields of work, such as for example agriculture, earth-moving in building yards or in quarries or in operations for storage and/or loading in areas assigned to the sorting of goods, such as for example airport areas, has now been known for a long time.

The main feature of these earth-movers is indeed that they can travel and work alternately in two directions, which are usually related to their longitudinal axis, substantially with equal ease.

These bidirectional earth-movers can be distinguished substantially into two categories: a first category, which is usually extremely specialized, operates substantially exclusively in the work areas where the execution of its functions is required; a second category, while being nonetheless required to perform highly specific operations, must sometimes, if not regularly, cross regions of normal road traffic or in any case of road traffic that is not strictly controlled.

In both of the above mentioned categories, there is a strong need to equip the earth-movers belonging thereto with an adequate and efficient lighting system.

In the first category, which is particularly specialized, the lighting system is generally constituted by work lights that allow the earth-mover to work even in faint lighting conditions if not in total darkness.

These machines do not strictly have to be fitted with the signalling lights prescribed by the Highway Code for ordinary travel, but this entails that if these machines must be transferred for example from one building yard to another or from one quarry to another, it is necessary to load them on trucks constructed specifically for their transport; such earth-movers cannot therefore be fully independent, not even for short transfers from their assigned areas.

However, it would be useful if these machines had some autonomy in travel, in order to save on transport costs.

As regards the second category mentioned above, the need to have an adequate lighting system that also complies with the statutory provisions of the Highway Code is even more felt; indeed, farming machines, for example, perhaps used by consortia on parcels of land that are linked by roads open to public traffic, cannot entail transport with dedicated trucks, on penalty of high operating costs.

Therefore, for earth-movers related to the second category it is necessary to also provide the normal lighting system prescribed by the Highway Code during travel on public roads in addition to the work lighting system.

Therefore, these earth-movers, in addition to sometimes having a redundant lighting system, also have a preferential travel direction, at least in a context that is not strictly related to their work.

The fact of having a preferential travel direction in ordinary travel can sometimes be a considerable drawback; the earth-mover that has ended its work in a given area and must reach another work area over a road open to public traffic is forced to arrange itself in its travel configuration in compliance with the Highway Code; sometimes travel can be very troublesome if not impossible, for example if material loaded in a bucket of the machine is to be transferred in addition to the simple transfer of the machine itself, since the travel configuration according to the Highway Code might be hindered in its visibility or in any case in movement by the load.

A principal aim of the present invention is to provide a bidirectional earth-mover that solves the drawbacks shown above by known types, in particular providing a substantial symmetry in travel, not only in relation to the operating configurations of the machine, but also in relation to the travel configurations according to the Highway Code outside the areas assigned strictly to work.

Accordingly, an object of the present invention is to provide an earth-mover which, albeit maintaining a fully efficient lighting system for work and for travel in compliance with the Highway Code, eliminates the redundancy and complication of the lighting system.

Another object of the present invention is to provide an earth-mover whose method for changing travel configuration is extremely simple, can be performed even by an unspecialized operator, and is partly automated.

Another object of the present invention is to provide an earth-mover in which the costs of the lighting system are competitive with respect to those related to known earth-movers.

Another object of the present invention is to provide an earth-mover the lighting system whereof is perfectly compatible with its remaining components from the electromechanical point of view.

This aim, these objects, and others which will become apparent hereinafter are achieved by a bidirectional earth-mover, according to the invention, which comprises two or more movable lamp clusters supported by a chassis and arranged mutually opposite along its longitudinal axis, each one of said two or more lamp clusters being provided with one or more headlamps for forward travel and with a set of lamps comprising stop lights, direction indicators, and a rear reflector; said one or more headlamps and said set of lamps being activatable in a mutually exclusive manner with movement of the respective said lamp clusters; means being furthermore provided, which can be controlled by the operator, for passing from the activation of said one or more headlamps to the activation of said sets of lamps or vice versa according to the travel condition of said bidirectional earth-mover.

Further characteristics and advantages of the present invention will become apparent from the following detailed description of an embodiment thereof, illustrated only by way of non-limitative example in the accompanying drawings, wherein:
figure 1 is a side view of an earth-mover according to the invention;
figures 2, 3, and 4 are axonometric views of details of the earth-mover according to the invention;
figure 5 is a circuit diagram related to the hydraulic circuit of the earth-mover according to the invention.

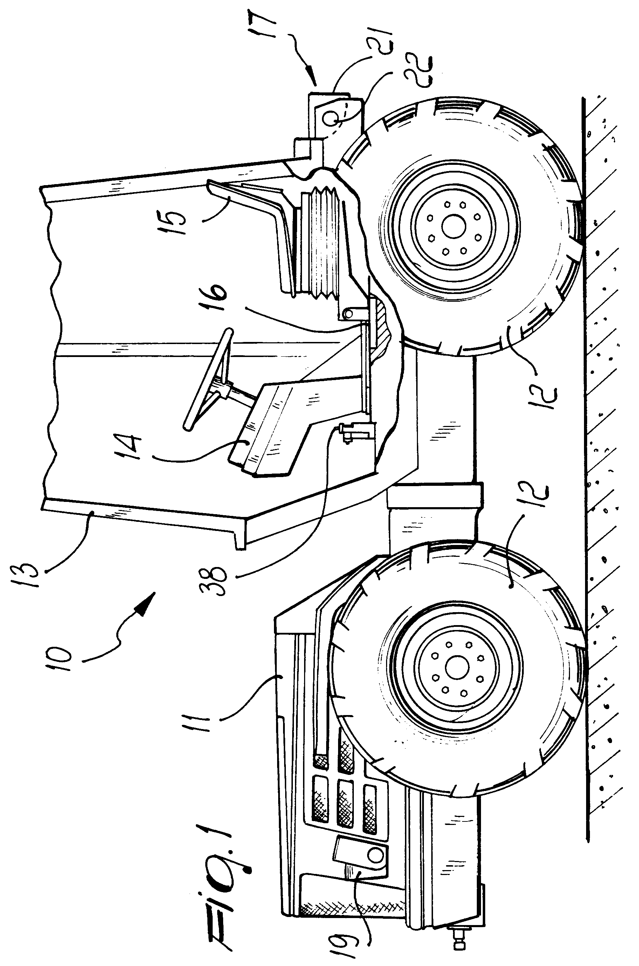

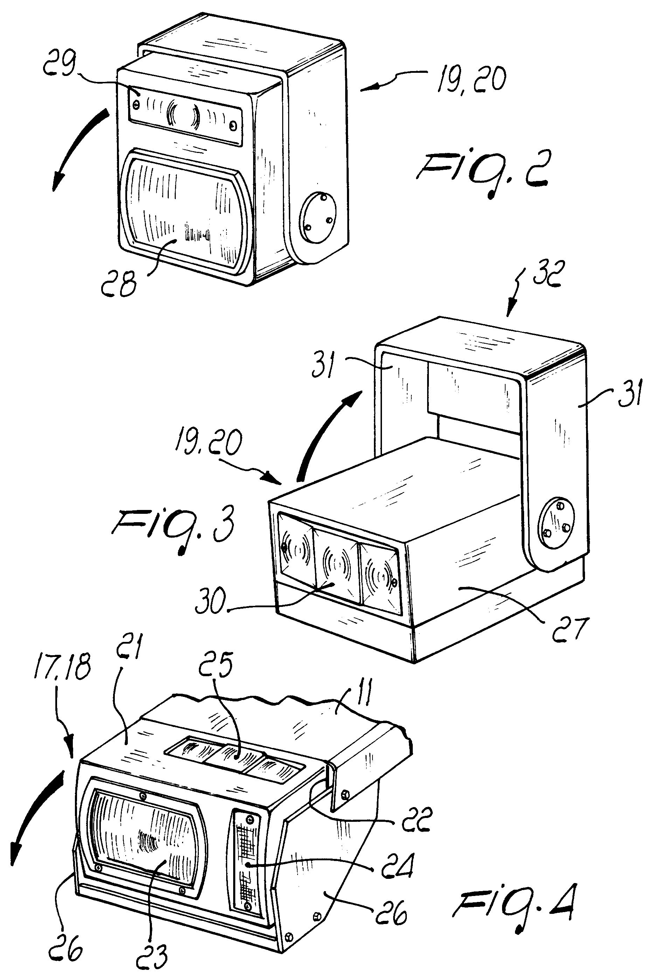

With reference to figures 1 to 5, a bidirectional earth-mover, according to the invention, is generally designated by the reference numeral 10.

The bidirectional earth-mover 10 is constituted by a chassis 11 with four wheels 12 supporting a control cabin 13 that internally accommodates a dashboard 14 and a driver's post constituted by a fold-down seat 15.

The dashboard 14 and the seat 15 are jointly rotatable through 180^{o} about a vertical axis by means of a fifth wheel 16 or an equivalent bearing system rotatably coupled to the chassis 11.

Four lamp clusters, designated by the reference numerals 17 to 20, are furthermore supported on the chassis 11 and are arranged so as to form two pairs arranged mutually opposite in respective end regions of the bidirectional earth-mover 10 with respect to its longitudinal axis.

The lamp clusters 17 and 18 that form one of the two pairs are arranged mutually opposite to the left and to the right, at the sides, of the bidirectional earth-mover 10.

Each one of the lamp clusters 17 and 18 comprises a box-like body 21 that is substantially prism-shaped, except for a region 22 of its surface that is radiused; a white-light headlamp 23 for forward travel and an orange lamp 24 acting as an intermittent direction indicator are flush-mounted in said body along one of its surfaces, and a set of lamps 25, which comprises mutually integrated stop lights, direction indicator, and a rear reflector for reversing the travel direction, are flush-mounted in said body along another one of its surfaces, said surfaces being mutually perpendicular.

The box-like body 21 is supported on the chassis 11 by pivoting to two wings 26 rigidly coupled to said chassis.

The chassis 11 is furthermore radiused complementarily to the region 22 at the box-like body 21.

The lamp clusters 19 and 20 constituting the other pair are identical and are arranged mutually opposite along the sides of the bidirectional earth-mover 10.

Each one of the lamp clusters 19 and 20 is constituted by a box-like body 27 that is substantially prism-shaped and in which the following elements are flush-mounted along two mutually perpendicular surfaces: in a first surface, a white-light headlamp 28 and an orange lamp 29 for intermittent direction signalling, and in a second surface, a set of lamps 30 comprising mutually integrated stop lights, direction indicator, and rear reflector for reversing the travel direction.

The box-like body 27 is connected to the chassis 11 by pivoting, about a substantially horizontal rotation axis, to two arms 31 of a C-shaped supporting element 32 that is in turn fixed to the chassis 11.

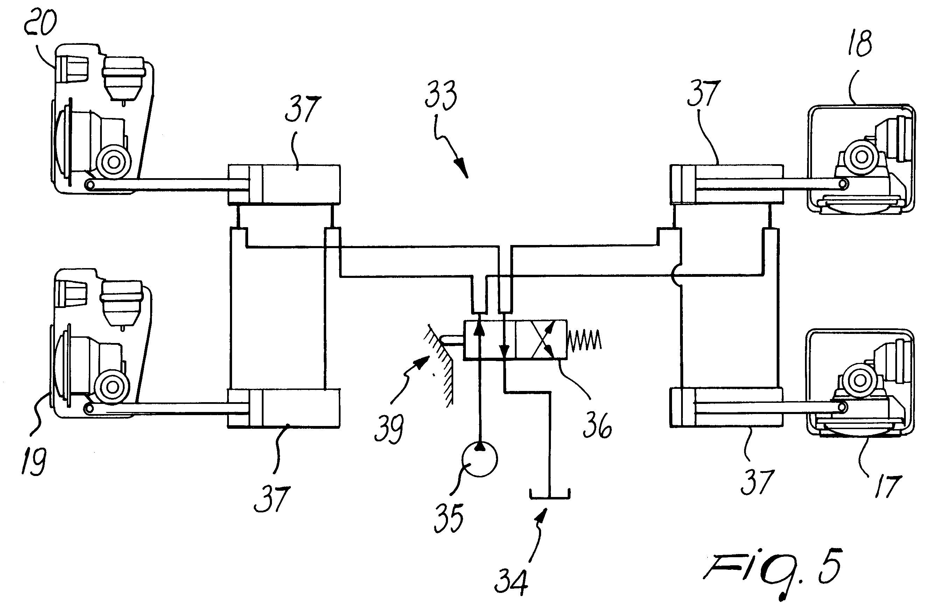

With particular reference to figure 5, a hydraulic circuit for moving the lamp clusters 17 to 20 is generally designated by the reference numeral 33.

The hydraulic circuit 33 comprises a discharge tank 34 for the oil and a pump 35, which are provided with respective ducts connected to a slide-valve distributor 36 that is actuated mechanically and reverses the flows.

Four actuators 37 are also connected to the slide-valve distributor 36, and each one actuates the movement of one of the lamp clusters 17 to 20.

A button 38 controls the electrical activation of the sets of lamps 25 and 30, of the headlamps 23 and 28, and of the orange lamps 24 and 29 related to the lamp clusters 17 to 20 according to the travel condition of the bidirectional earth-mover 10 by circuital reversal of an electric circuit not shown in the figures, whereas a lever 39 mechanically actuates the slide-valve distributor 36, and therefore the movement of the lamp clusters 17 to 20, again according to said travel condition.

The button 38 is located inside the cabin 13 and is actuatable automatically according to the position assumed by the seat 15.

In particular, when the seat 15 is in a position that is substantially opposite to the one in which the button 38 is located, said button remains raised, and this entails a given state of the electric circuit.

Instead, when the seat 15 presses the button 38, it induces a consequent change in the electrical circuital status; in order to be turned, said seat must first be folded down towards the dashboard and then returned to its operating position.

The lever 39 is located at the support of the seat 15.

As regards the operation of the lamp clusters 17 to 20, it should be noted that they all rotate substantially about a horizontal axis and alternately conceal one of the sides of the respective box-like bodies 21 or 27 in which the headlamps and the lamps are installed.

It is furthermore noted that the hydraulic circuit 33 is configured so that once the flow has been switched, there is a simultaneous switching of the position of the lamp clusters 17 to 20 into configurations, that are complementary according to a travel configuration, if considered in pairs.

In practice it has been observed that the intended aim and objects have been achieved; in particular, it is noted that a perfect travel symmetry has been achieved even if the earth-mover must travel on roads that are subjected to the statutory provisions of the Highway Code.

It is furthermore evident that it is extremely easy to pass from one travel configuration to the opposite one; this operation is practically semiautomatic and immediately makes the earth-mover available in a configuration that is adapted to allow road travel without any problem.

It is furthermore noted that the redundancy of headlamps has been fully eliminated, since the parts of the lamp clusters that are not necessary retract and are deactivated.

One should also note the extreme simplicity in construction, which does not require an overall burdening of the structure of the earth-mover and does not affect its performance in operation and travel.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Bidirectional earth-mover, characterized in that it comprises two or more movable lamp clusters (17,18,19,20) supported by a chassis (11) and arranged mutually opposite along its longitudinal axis, each one of said two or more lamp clusters being provided with one or more headlamps (23,28) for forward travel and with a set of lamps (25,30) that comprises stop lights, direction indicators, and a rear reflector; in that said one or more headlamps (23,28) and said set of lamps (25,30) can be activated in a mutually exclusive manner with movement of the respective said lamp clusters (17,18,19,20); and in that means (33) are provided, which can be controlled by the operator, for passing from the activation of said one or more headlamps (23,28) to the activation of said multicolored lamps (25,30) or vice versa according to the travel condition of said bidirectional earth-mover.

2. Bidirectional earth-mover according to claim 1, characterized in that it comprises two pairs of said lamp clusters (17,18,19,20) that are arranged mutually opposite along its longitudinal axis.

3. Bidirectional earth-mover according to one or more of the preceding claims, characterized in that each one of said lamp clusters (17,18,19,20) is rotatable about a rotation axis.

4. Bidirectional earth-mover according to claim 3, characterized in that the movement of each one of said lamp clusters (17,18,19,20) about said rotation axis alternately retracts said one or more headlamps (23,28) and said multicolored lamps (25,30).

5. Bidirectional earth-mover according to claim 3, characterized in that said rotation axis is substantially horizontal.

6. Bidirectional earth-mover according to one or more of the preceding claims, characterized in that said means are of the electric and hydraulic type and comprise a hydraulic circuit (33) and an electric circuit that can in turn be activated by the operator.

7. Bidirectional earth-mover according to claim 6, characterized in that said hydraulic circuit (33) comprises an actuator (37) for each one of said lamp clusters (17,18,19,20), said actuator (37) producing the movement of said lamp clusters about their respective rotation axes.

8. Bidirectional earth-mover according to claim 6, characterized in that said hydraulic circuit (33) comprises a distributor (36) of the slide-valve type that is actuated mechanically to reverse the flows in said actuators (37).

9. Bidirectional earth-mover according to one or more of the preceding claims, characterized in that said distributor (36) is actuated mechanically by a lever (39) that is available for actuation by the operator.

10. Bidirectional earth-mover according to one or more of the preceding claims, characterized in that the states of activation of said related one or more headlamps (23,28) and of said related sets of lamps (25,30) in said two pairs of said lamp clusters (17,18,19,20) are mutually opposite and can be switched simultaneously by reversal of an electric circuit, which can be performed by means of a component (38) of said circuit that is activatable directly or indirectly by the operator.

11. Bidirectional earth-mover according to one or more of the preceding claims, characterized in that it comprises a dashboard (14) and a driver's post (15) jointly rotatable so as to arrange themselves concordantly with the travel configuration.

12. Bidirectional earth-mover according to claims 10 and 11, characterized in that said component actuatable by the operator is constituted by a button (38) that can be actuated by a fold-down seat (15), which constitutes said driver's post, in one of its two possible operating configurations.

## Patentansprüche

1. Zweirichtungserdbaumaschine, dadurch **gekennzeichnet,** daß sie zwei oder mehr bewegbare Leuchtenbaugruppen (17, 18, 19, 20) hat, die von einem Fahrgestell (11) getragen werden und in Richtung ihrer Längsachse einander gegenüber angebracht sind, wobei jede der zwei oder mehr Leuchtenbaugruppen einen oder mehrere Scheinwerfer (23, 28) für das Vorwärtsfahren und einen Leuchtensatz (25, 30) mit Bremsleuchten, Fahrtrichtungsanzeigern und einem Rückstrahler hat; daß der eine oder die mehreren Scheinwerfer (23, 28) und der Leuchtensatz (25, 30) einander ausschließend mit der Bewegung der entsprechenden Leuchtenbaugruppen (17, 18, 19, 20) aktiviert werden können; und daß Mittel (33) vorgesehen sind, die vom Bediener zum Wechseln von der Aktivierung des einen oder der mehreren Scheinwerfer (23, 28) in die Aktivierung der farbigen Leuchten (25, 30) oder umgekehrt, je nach Fahrtzustand der Zweirichtungserdbaumaschine, gesteuert werden können.

2. Zweirichtungserdbaumaschine nach Anspruch 1, dadurch **gekennzeichnet,** daß sie zwei Paare der Leuchtenbaugruppen (17, 18, 19, 20) hat, die in Richtung ihrer Längsachse einander gegenüber angeordnet sind.

3. Zweirichtungserdbaumaschine nach einem oder mehreren der vorhergehenden Ansprüche, dadurch **gekennzeichnet,** daß jede Leuchtenbaugruppe (17, 18, 19, 20) um eine Drehachse drehbar ist.

4. Zweirichtungserdbaumaschine nach Anspruch 3, dadurch **gekennzeichnet,** daß die Bewegung jeder Leuchtenbaugruppe (17, 18, 19, 20) um die Drehachse wechselnd den einen oder die mehreren Scheinwerfer (23, 28) und die farbigen Leuchten (25, 30) einzieht.

5. Zweirichtungserdbaumaschine nach Anspruch 3, dadurch **gekennzeichnet,** daß die Drehachse weitgehend horizontal ist.

6. Zweirichtungserdbaumaschine nach einem oder mehreren der vorhergehenden Ansprüche, dadurch **gekennzeichnet,** daß die Mittel elektrisch und hydraulisch sind und einen hydraulischen Schaltkreis (33) und einen elektrischen Schaltkreis enthalten, die nacheinander vom Bediener aktivierbar sind.

7. Zweirichtungserdbaumaschine nach Anspruch 6, dadurch **gekennzeichnet,** daß der hydraulische Schaltkreis (33) für jede Leuchtenbaugruppe (17, 18, 19, 20) einen Betätiger (37) enthält, der die Bewegung der Leuchtenbaugruppen um ihre jeweilige Drehachse erzeugt.

8. Zweirichtungserdbaumaschine nach Anspruch 6, dadurch **gekennzeichnet,** daß der hydraulische Schaltkreis (33) einen Verteiler (36) in Form eines Schieberventils enthält, der zum Umkehren der Strömungsrichtungen in den Betätigern (37) mechanisch betätigt wird.

9. Zweirichtungserdbaumaschine nach einem oder mehreren der vorhergehenden Ansprüche, dadurch **gekennzeichnet,** daß der Verteiler (36) mechanisch über einen Hebel (39) vom Bediener betätigt wird.

10. Zweirichtungserdbaumaschine nach einem oder mehreren der vorhergehenden Ansprüche, dadurch **gekennzeichnet,** daß die Aktivierungszustände des einen oder der mehreren Scheinwerfer (23, 28) und der zugeordneten Leuchtensätze (25, 30) in den zwei Paaren der Leuchtenbaugruppen (17, 18, 19, 20) einander entgegengesetzt sind und mittels Umkehrung eines elektrischen Schaltkreises gleichzeitig schaltbar sind, die durch eine direkt oder indirekt vom Bediener aktivierbare Komponente (38) des Schaltkreises, ausgeführt werden kann.

11. Zweirichtungserdbaumaschine nach einem oder mehreren der vorhergehenden Ansprüche, dadurch **gekennzeichnet,** daß sie eine Instrumententafel (14) und einen Fahrersitz (15) enthält, die gemeinsam drehbar sind, so daß sie sich entsprechend der Fahrtkonfiguration ausrichten.

12. Zweirichtungserdbaumaschine nach den Ansprüchen 10 und 11, dadurch **gekennzeichnet,** daß die vom Bediener betätigbare Komponente ein Schalter (38) ist, der von einem senkbaren Sitz (15), der den Fahrersitz darstellt, in einer seiner zwei möglichen Betriebskonfigurationen betätigt werden kann.

## Revendications

1. Engin de terrassement bidirectionnel,
caractérisé en ce qu'il comprend deux ou plusieurs groupes de lampes mobiles (17,18,19,20), supportés par un châssis (11) et agencés de façon mutuellement opposée le long de son axe longitudinal, chacun desdits deux ou plusieurs groupes de lampes étant muni d'un ou de plusieurs phares (23,28) pour le déplacement avant et d'une série de lampes (25,30) qui comprend des feux stop, des indicateurs de direction et un réflecteur arrière ; en ce que ledit phare ou plusieurs phares (23,28) et ladite série de lampes (25,30) peuvent être activés d'une manière mutuellement exclusive avec le mouvement desdits groupes de lampes respectîfs (17,18,19,20) ; et en ce que des moyens (33) sont prévus, qui peuvent être commandés par l'opérateur, pour passer de l'activation dudit phare ou de plusieurs phares (23,28) à l'activation desdites lampes multicolores (25,30) ou réciproquement selon la condition de déplacement dudit engin de terrassement bidirectionnel.

2. Engin de terrassement bidirectionnel selon la revendication 1,
caractérisé en ce qu'il comprend deux paires desdits groupes de lampes (17,18,19,20) qui sont agencées de façon mutuellement opposée le long de son axe longitudinal.

3. Engin de terrassement bidirectionnel selon l'une ou plusieurs des revendications précédentes,
caractérisé en ce que chacun desdits groupes de lampes (17,18,19,20) peut tourner autour d'un axe de rotation.

4. Engin de terrassement bidirectionnel selon la revendication 3,
caractérisé en ce que le mouvement de chacun desdits groupes de lampes (17,18,19,20) autour dudit axe de rotation escamote, de façon alternative, ledit phare ou plusieurs phares (23,28) et lesdites lampes multicolores (25,30).

5. Engin de terrassement bidirectionnel selon la revendication 3,
caractérisé en ce que ledit axe de rotation est sensiblement horizontal.

6. Engin de terrassement bidirectionnel selon l'une ou plusieurs des revendications précédentes,
caractérisé en ce que lesdits moyens sont du type électrique et hydraulique et comprennent un circuit hydraulique (33) et un circuit électrique qui peuvent tour à tour être activés par l'opérateur.

7. Engin de terrassement bidirectionnel selon la revendication 6,
caractérisé en ce que ledit circuit hydraulique (33) comprend un actionneur (37) pour chacun desdits groupes de lampes (17,18,19,20), ledit actionneur (37) produisant le mouvement desdits groupes de lampes autour de leurs axes de rotation respectifs.

8. Engin de terrassement bidirectionnel selon la revendication 6,
caractérisé en ce que ledit circuit hydraulique (33) comprend un distributeur (36) du type à tiroir qui est actionné mécaniquement pour inverser les écoulements dans lesdits actionneurs (37).

9. Engin de terrassement bidirectionnel selon l'une ou plusieurs des revendications précédentes,
caractérisé en ce que ledit distributeur (36) est actionné mécaniquement par un levier (39) qui est accessible par l'opérateur pour l'actionnement.

10. Engin de terrassement bidirectionnel selon l'une ou plusieurs des revendications précédentes,
caractérisé en ce que les états d'activation de ladite lampe ou des plusieurs lampes concernées (23,28) et desdites séries de lampes concernées (25,30) dans lesdites deux paires desdits groupes de lampes (17,18,19,20) sont mutuellement en opposition et peuvent être commutés simultanément par inversion d'un circuit électrique, ce qui peut être réalisé par l'intermédiaire d'un composant (38) dudit circuit qui peut être activé directement ou indirectement par l'opérateur.

11. Engin de terrassement bidirectionnel selon l'uns ou plusiaurs des revendications précédentes,
caractérisé en ce qu'il comprend un tableau de bord (14) et un poste de conduite (15) pouvant tourner ensemble de façon à les agencer de façon concordante avec la configuration de déplacement.

12. Engin de terrassement bidirectionnel selon les revendications 10 et 11,
caractérisé en ce que ledit composant actionnable par l'opérateur est constitué par un bouton (38) qui peut être actionné par un siège pliant (15), qui constitue ledit poste de conduite, dans l'une de ces deux configurations de fonctionnement possibles.
